# EUROPÄISCHE PATENTSCHRIFT

(11) **EP 0 439 704 B1**
(45) Veröffentlichungstag und Bekanntmachung des Hinweises auf die Patenterteilung: **29.09.1993**
(21) Anmeldenummer: 90121879.2
(22) Anmeldetag: 15.11.1990
(51) Int. Cl.: F28D 20/00, F24H 7/00

(54) **Wärmespeicherstein**
Heat storage brick
Brique pour accumuler la chaleur

(30) Priorität: 01.02.1990 DE 4002969
(43) Veröffentlichungstag der Anmeldung: 07.08.1991
(73) Patentinhaber: MegaCeram GmbH, D-85737 Ismaning (DE)
(72) Erfinder: Lambrecht, Jürgen, Dipl.-Ing., W-8021 Irschenhausen/Isartal (DE)
(74) Vertreter: Tetzner, Volkmar, Dr.-Ing. Dr. jur.

(56) Entgegenhaltungen:
- FR-A- 631 762
- GB-A- 685 789
- US-A- 2 833 532

## Beschreibung

Die Erfindung betrifft eine Wärmespeichersteinanordnung mit wenigstens einer ebenen Lage von nebeneinander angeordneten Wärmespeichersteinen sowie Kanälen für ein zum Wärmetransport dienendes Fluid, wobei der einzelne Wärmespeicherstein in einem parallel zur Lagenebene verlaufenden Querschnitt die Form eines Polygons aufweist.

Wärmespeichersteine für die Raumheizung und für industrielle Zwecke unterscheiden sich sehr stark in ihrer Form. Dies ist u.a. darauf zurückzuführen, daß bei der Raumheizung die Entladedauer lang, d.h. das Verhältnis von Speicherkapazität zu Entladeleistung groß ist, während bei industriellen Zwecken die Entladedauer in der Regel klein ist, da bei derartigen Anwendungsfällen die gespeicherte Wärme schnell abgegeben werden muß.

Wärmespeichersteine für Elektro- bzw. Nachtstrom-Wärmespeicher haben heute eine weitgehend ziegelsteinähnliche Form, in die Rillen für die Heizdrähte eingearbeitet sind (vgl. DE-C 23 26 676). Sie weisen dagegen keine Kanäle für die Luft auf, mit der der Speicher entladen wird.

Industrielle Wärmespeicher sind dagegen grundsätzlich mit Steinen ausgestattet, in die entweder Kanäle eingearbeitet sind, oder die komplizierte Formen aufweisen, mit denen Strömungskanäle gebildet und der Wärmeübergang verbessert werden soll (vgl. Michael A. Geyer, Hochtemperatur-Speichertechnologie, Springer-Verlag 1987, S. 47, 69 bis 71, ferner DE-C 33 33 764 sowie 25 10 893).

Durch die US-A-2 833 532 ist weiterhin ein Wärmespeicherstein bekannt, der im Querschnitt etwa die Form eines achteckigen Polygons aufweist, wobei vier Außenseiten mit V-förmigen Kanälen versehen sind und benachbarte Wärmespeichersteine über diese Außenseiten aneinander anliegen, während die übrigen vier Außenseiten kreisbogenförmig gerundet sind, so daß zwischen vier benachbarten Wärmespeichersteinen ein Kanal von kreisförmigem Querschnitt gebildet wird. Ein weiterer großer Kanal von kreisförmigem Querschnitt ist zentral in jedem Wärmespeicherstein vorgesehen.

Eine Wärmespeichersteinanordnung entsprechend der eingangs genannten, im Oberbegriff des Anspruches 1 vorausgesetzten Gattung ist durch die oben zitierte Literaturstelle (Geyer, S. 47, Bild 15b) bekannt. Bei dieser Anordnung besitzt der Wärmespeicherstein im Querschnitt die Form eines gleichseitigen sechseckigen Polygons, wobei einerseits im Stein eine Anzahl von Kanälen für das zum Wärmetransport dienende Fluid vorgesehen sind, und andererseits die Außenseiten des Steines mit halbkreisförmigen Ausnehmungen versehen sind, durch die bei der Nebeneinanderanordnung der Steine in der Wärmespeicheranordnung weitere Kanäle gebildet werden.

Bei den der Erfindung zugrundeliegenden eingehenden Versuchen zeigte sich , daß auch diese bekannte Wärmespeicherstein anordnung noch mit gewissen Nachteilen behaftet ist. Ungünstig ist vor allem die verhältnismäßig komplizierte Form des Steines, die wegen der Vielzahl der - teils im Stein, teils am Rand des Steines gebildeten - Kanäle zu einem hohen Fertigungsaufwand führt. Verringert man andererseits bei der bekannten Ausführung die Zahl der Kanäle, so verschlechtert sich das Verhältnis der vom Wärmetransportfluid benetzten Fläche zum Speichervolumen.

Ungünstig ist bei der bekannten Ausführung weiterhin, daß mit dieser Sechseckform des Wärmespeichersteines keine vollständige Abdeckung eines rechteckigen oder quadratischen Querschnitts der Wärmespeichersteinanordnung erreicht wird. Es verbleiben vielmehr am Rand der Wärmespeichersteinanordnung freie Zonen, die sich nicht mit den sechseckigen Steinen, sondern nur mit Sonderformen schließen lassen.

Der Erfindung liegt daher die Aufgabe zugrunde, eine Wärmespeichersteinanordnungentsprechend dem Oberbegriff des Anspruches 1 so auszubilden, daß sich mit einer einfachen, fertigungstechnisch leicht herstellbaren Form des Steines ein hohes Verhältnis zwischen der vom Wärmetransportfluid benetzten Fläche und dem Speichervolumen erzielen läßt, wobei zugleich erreicht werden soll, daß unter ausschließlicher Verwendung eines einzigen Steintyps der übliche (rechteckige oder quadratische) Querschnitt einer Wärmespeicheranordnung vollständig, d.h. lückenlos, abgedeckt wird.

Diese Aufgabe wird erfindungsgemäß durch folgende Merkmale gelöst:
a) die Form des Polygons ist ein Achteck, bei dem vier sich diametral gegenüberliegende und paarweise parallel zueinander verlaufende Hauptseiten zusammen mit ihrer Verlängerung die Umrißform eines gedachten Quadrates bilden;
b) die verbleibenden, sich gleichfalls diametral gegenüberliegenden vier Außenseiten des Polygons verlaufen innerhalb der Umrißform dieses gedachten Quadrates, sind gleichlang und verlaufen paarweise parallel zueinander;
c) die zwischen den verbleibenden Außenseiten des Polygons und der Umrißform des gedachten Quadrates vorhandenen freien Räume bilden in der Wärmespeichersteinanordnung zwischen jeweils vier benachbarten Wärmespeichersteinen Kanäle, die die einzigen zur Aufnahme des für den Wärmetransport dienenden Fluids bestimmten Kanäle der Wärmespeichersteinanordnung darstellen.

Zweckmäßige Ausgestaltungen der Erfindung sind Gegenstand der Unteransprüche.

Aus dem so definierten, extrem einfachen Steinquerschnitt läßt sich das Muster einer Wärmespeichersteinanordnung aufbauen, die insgesamt einen quadratischen oder rechteckigen Außenquerschnitt aufweist und sich damit in übliche quadratische oder rechteckige Behälter lückenlos einfügen läßt.

Der in der erfindungsgemäßen Wärmespeicherstein anordnung verwendet Stein besitzt dabei eine sehr einfache Form, die sich fertigungstechnisch leicht herstellen läßt.

Ein besonderer Vorteil der Erfindung liegt in der Möglichkeit, ein sehr hohes Verhältnis zwischen der durch das Wärmetransportfluid benetzten Fläche des Steines und dem Speichervolumen zu erreichen, was insbesondere für rasch zu entladende industrielle Wärmespeicher von Wichtigkeit ist.

Der Anteil der Fluidkanäle am Querschnitt der Wärmespeichersteinanordnung ist dabei frei wählbar (je weiter die oben im Merkmal b genannten verbleibenden Außenseiten des Polygons innerhalb der Umrißform des gedachten Quadrates verlaufen, um so größer wird der Querschnitt des von vier benachbarten Wärmespeichersteinen begrenzten Kanales). Speichermaterial und Fluidkanäle sind dabei gleichmäßig über den Querschnitt der Wärmespeichersteinanordnung verteilt.

Da eine ausreichende Zahl von genügend großen Fluidkanälen jeweils zwischen den Wärmespeichersteinen (und zwar jeweils ein Kanal an der Grenze von vier benachbarten Wärmespeichersteinen) gebildet wird, kann bei der erfindungsgemäßen Lösung auf Fluidkanäle im Innern der Steine verzichtet werden, was die Fertigung vereinfacht.

Weitere Merkmale und Vorteile der Erfindung ergeben sich aus der folgenden Beschreibung zweier in der Zeichnung veranschaulichter Ausführungsbeispiele. Es zeigen
- Fig.1: eine Aufsicht auf ein erstes Ausführungsbeispiel eines Wärmespeichersteines,
- Fig.2: eine Gruppe von vier nebeneinander angeordneten Steinen gemäß Fig.1,
- Fig.3: eine aus Steinen gemäß Fig.1 aufgebaute Lage einer Wärmespeicheranordnung,
- Fig. 4: die Darstellung (entsprechend Fig. 2) eines weiteren Ausführungsbeispiels der Erfindung.

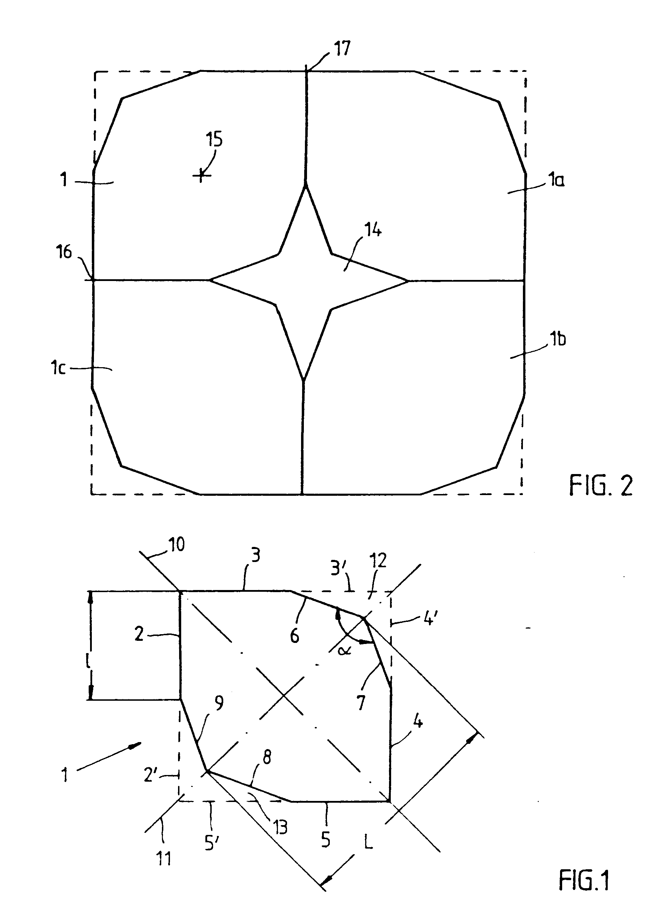

Der in Fig.1 in einer Aufsicht veranschaulichte Wärmespeicherstein 1 besitzt zwei parallel zur Zeichenebene der Fig.1 liegende plane Hauptflächen. Im Querschnitt weist dieser Stein 1 die Form eines Polygons auf, dessen sich diametral gegenüberliegende und paarweise parallel zueinander verlaufende vier Hauptseiten 2, 3, 4, 5 zusammen mit ihren (in Fig.1 gestrichelten) Verlängerungen 2', 3', 4', 5' die Umrißform eines gedachten Quadrates bilden.

Die verbleibenden, sich gleichfalls diametral gegenüberliegenden Außenseiten 6, 7, 8 und 9 des Polygons verlaufen innerhalb der Umrißform dieses gedachten Quadrates.

Bei dem Ausführungsbeispiel gemäß Fig.1 besitzt der Querschnitt des Wärmespeichersteines 1 damit die Form eines achteckigen Polygons, wobei innerhalb der Umrißform des gedachten Quadrates vier gleichlange und paarweise parallel zueinander verlaufende Außenseiten 6, 7, 8, 9 liegen.

Der Querschnitt des Steines 1 gemäß Fig.1 ist damit symmetrisch sowohl zur langen Achse 10 als auch zur kurzen Achse 11.

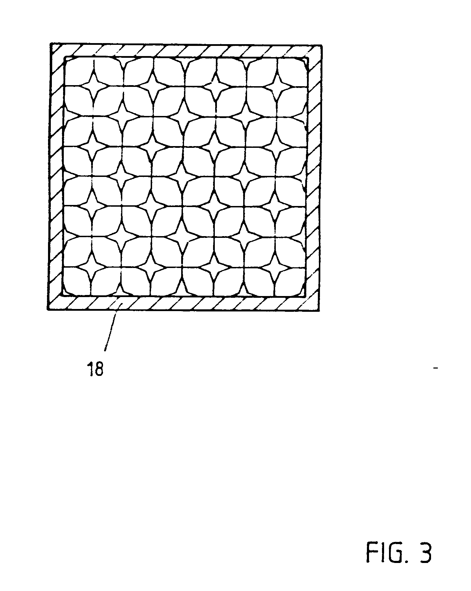

Der zwischen den Außenseiten 6, 7 bzw. 8, 9 und der Umrißform des gedachten Quadrates vorhandene freie Raum 12 bzw. 13 bildet in der Wärmespeichersteinanordnung (vgl. Fig. 2 und 3) einen Teil des Querschnitts eines von vier benachbarten Wärmespeichersteinen (z. B. 1, 1a, 1b, 1c gemäß Fig.2) begrenzten Kanales 14.

Bei dem Ausführungsbeispiel gemäß Fig.1 bilden die beiden aneinander angrenzenden, innerhalb der Umrißform des gedachten Quadrates liegenden Außenseiten 6, 7 bzw. 8, 9 auf ihrer dem Zentrum des Wärmespeichersteines 1 zugekehrten Seite einen Winkel α zwischen 90 und 180°, vorzugsweise zwischen 120 und 150°.

Dabei ist die Länge 1 der vier Hauptseiten 2, 3, 4, 5 des Polygons gleich der halben Länge L der kurzen Polygonachse 11. Diese Bemessung hat zur Folge, daß sowohl das Zentrum 15 des Wärmespeichersteines 1 (vgl. Fig.2) als auch die Eckpunkte 16 und 17 des Steines (an den Enden der langen Achse 10) denselben Abstand zum Kanal 14 besitzen. Es ist damit ein konstanter Maximalabstand zwischen Speichermaterial und Fluidkanal gegeben.

Wie ferner Fig.3 zeigt, läßt sich mit Wärmespeichersteinen der in den Fig. 1 und 2 veranschaulichten Form der Querschnittsraum eines quadratischen oder rechteckförmigen Behälters 18 lückenlos ausfüllen, wobei keine leeren Ecken oder Seitenstreifen vorhanden sind und das Speichermaterial sowie die Fluidkanäle gleichmäßig über den Querschnitt der Wärmespeichersteinanordnung verteilt sind.

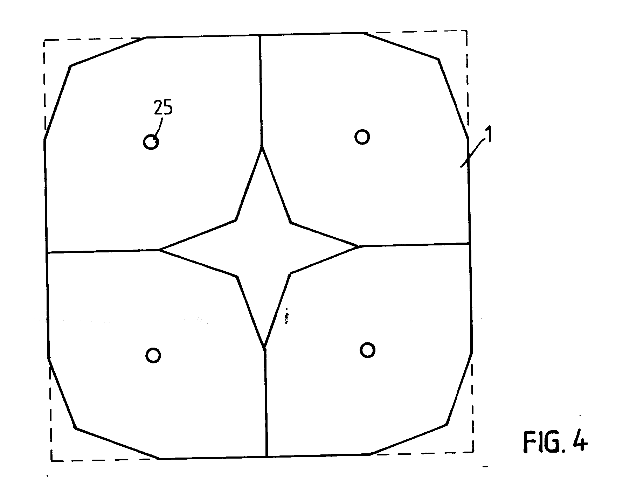

Soll der Wärmespeicherstein für eine Elektro- bzw. Nachtstromwärmespeichersteinanordnung Verwendung finden, so kann - wie es Fig.4 zeigt - der Wärmespeicherstein 1 mit wenigstens einem zur Aufnahme eines elektrischen Heizleiters bestimmten Kanal 25 versehen werden. Zweckmäßig fällt dabei die Achse dieses Kanales 25 mit der senkrecht zu den beiden Hauptflächen des Steines (d. h. senkrecht zur Zeichenebene der Fig.4) verlaufenden Mittellinie des Steines zusammen.

## Patentansprüche

1. Wärmespeichersteinanordnung mit wenigstens einer ebenen Lage von nebeneinander angeordneten Wärmespeichersteinen (1, 1a, 1b, 1c) sowie Kanälen (14) für ein zum Wärmetransport dienendes Fluid, wobei der einzelne Wärmespeicherstein in einem parallel zur Lagenebene verlaufenden Querschnitt die Form eines Polygons aufweist,
gekennzeichnet durch folgende Merkmale:
a) die Form des Polygons ist ein Achteck, bei dem vier sich diametral gegenüberliegende und paarweise parallel zueinander verlaufende Hauptseiten (2, 3, 4, 5) zusammen mit ihrer Verlängerung (2', 3', 4', 5') die Umrißform eines gedachten Quadrates bilden;
b) die verbleibenden, sich gleichfalls diametral gegenüberliegenden vier Außenseiten (6, 7, 8, 9) des Polygons verlaufen innerhalb der Umrißform dieses gedachten Quadrates, sind gleichlang und verlaufen paarweise parallel zueinander;
c) die zwischen den verbleibenden Außenseiten des Polygons und der Umrißform des gedachten Quadrates vorhandenen freien Räume (12, 13) bilden in der Wärmespeichersteinanordnung zwischen jeweils vier benachbarten Wärmespeichersteinen (1, 1a, 1b, 1c) Kanäle (14), die die einzigen zur Aufnahme des für den Wärmetransport dienenden Fluids bestimmten Kanäle der Wärmespeichersteinanordnung darstellen.

2. Wärmespeichersteinanordnung nach Anspruch 1, dadurch gekennzeichnet, daß die verbleibenden vier Außenseiten (6, 7, 8, 9) auf ihrer dem Zentrum des Wärme- speichersteines (1) zugekehrten Seite einen Winkel (α) zwischen 90 und 180°, vorzugsweise zwischen 120 und 150°, miteinander bilden.

3. Wärmespeichersteinanordnung nach den Ansprüchen 1 und 2, dadurch gekennzeichnet, daß die Länge (1) der vier Hauptseiten (2, 3, 4, 5) des Polygons gleich der halben Länge (L) der kurzen Polygonachse (11) ist.

4. Wärmespeichersteinanordnung nach Anspruch 1 in Form einer Elektro-Wärmespeichersteinanordnung, dadurch gekennzeichnet, daß die Wärmespeichersteine mit wenigstens einem zur Aufnahme eines elektrischen Heizleiters bestimmten Kanal (25) versehen sind.

5. Wärmespeichersteinanordnung nach Anspruch 4, dadurch gekennzeichnet, daß die Achse des Kanales (25) mit der senkrecht zu den beiden Hauptflächen des Wärmespeichersteines verlaufenden Mittellinie des Wärmespeichersteines zusammenfällt.

## Claims

1. Heat storage brick arrangement with at least one level course of heat storage bricks (1, 1a, 1b, 1c) arranged adjacent to one another as well as channels (14) for a fluid which serves for heat transport, wherein the individual heat storage brick has the shape of a polygon in a cross-section running parallel to the plane of the course, characterised by the following features:
a) the shape of the polygon is an octagon in which four diametrically opposed principal faces (2, 3, 4, 5) extending in pairs parallel to one another form together with their extensions (2', 3', 4', 5' ) the outline of an imaginary square;
b) the remaining four outer faces (6, 7, 8, 9) of the polygon, which are equally diametrically opposed, extend within the outline of this imaginary square, are of equal length and extend in pairs parallel to one another;
c) in the heat storage brick arrangement the free spaces (12, 13) between the remaining outer faces of the polygon and the outline of the imaginary square form channels (14) in each case between four adjacent heat storage bricks (1, 1a, 1b, 1c) which constitute the only channels in the heat storage brick arrangement which are intended to receive the fluid which serves for heat transport.

2. Heat storage brick arrangement as claimed in claim 1, characterised in that the remaining four outer faces (6, 7, 8, 9), on their side facing the centre of the heat storage brick (1), form an angle (α) between 90 and 180°, preferably between 120 and 150°, with one another.

3. Heat storage brick arrangement as claimed in claims 1 and 2, characterised in that the length (1) of the four principal faces (2, 3, 4, 5) of the polygon is equal to half the length (L) of the short polygon axis (11).

4. Heat storage brick arrangement as claimed in claim 1 in the form of an electric heat storage brick arrangement, characterised in that the heat storage bricks are provided with at least one channel (25) to receive an electric heating conductor.

5. Heat storage brick arrangement as claimed in claim 4, characterised in that the axis of the channel (25) coincides with the centre line of the heat storage brick which extends at right angles to the two principal surfaces of the heat storage brick.

## Revendications

1. Assemblage de briques accumulatrices de chaleur comprenant au moins une couche plane de briques accumulatrices de chaleur qui sont juxtaposées (1, 1a, 1b, 1c) ainsi que des canaux (14) destinés à un fluide caloporteur, la brique individuelle accumulatrice de chaleur ayant en coupe transversale parallèle au plan de la couche la forme d'un polygone, caractérisé par les particularités suivantes :
a) la forme du polygone est un octogone dans lequel quatre côtés principaux (2, 3, 4, 5) diamétralement opposés et parallèles deux à deux ont avec leur prolongement (2', 3',4', 5') la forme du contour d'un carré imaginaire ;
b) les quatre autres côtés extérieurs également diamétralement opposés (6, 7, 8, 9) du polygone passent à l'intérieur de la forme du contour de ce carré imaginaire, ils ont la même longueur et sont parallèles deux à deux ;
c) les espaces libres (12, 13) subsistant entre les autres côtés extérieurs du polygone et la forme du contour du carré imaginaire forment à l'intérieur de l'assemblage de briques accumulatrices de chaleur et entre quatre briques voisines (1, 1a, 1b, 1c) des canaux (14) qui représentent les uniques canaux de l'assemblage de briques accumulatrices de chaleur qui sont destinés à faire passer le fluide caloporteur.

2. Assemblage de briques accumulatrices de chaleur selon la revendication 1, caractérisé en ce que les quatre autres côtés extérieurs (6, 7, 8, 9) inscrivent dans chaque cas du côté tourné vers le centre de la brique un angle (α) compris entre 90 et 180°, de préférence entre 120 et 150°.

3. Assemblage de briques accumulatrices de chaleur selon les revendications 1 et 2, caractérisé en ce que la longueur (1) des quatre côtés principaux (2, 3, 4, 5) du polygone est égale à la moitié de la longueur (L) du petit axe (11) du polygone.

4. Assemblage de briques accumulatrices de chaleur selon la revendication 1, en forme d'un assemblage électrique de briques accumulatrices dé chaleur, caractérisé en ce que les briques accumulatrices de chaleur comportent au moins un canal (25) destiné à loger un conducteur chauffant électrique.

5. Assemblage de briques accumulatrices de chaleur selon la revendication 4, caractérisé en ce que l'axe du canal (25) coincide avec la ligne de symétrie de la brique qui est perpendiculaire aux deux surfaces principales de cette brique.
